# EUROPEAN PATENT APPLICATION

(11) **EP 4 763 303 A1**
(43) Date of publication of application: **24.06.2026**
(21) Application number: 24220859.3
(22) Date of filing: 18.12.2024
(51) Int. Cl.: B01D 19/00, C02F 1/20

(54) **GAS SEPARATION APPARATUS AND CORRESPONDING METHOD**

(71) Applicant: Linde GmbH, 82049 Pullach (DE)
(72) Inventor: Flegiel, Felix, 81369 München (DE); Lauchner, Daniela, 86405 Meitingen (DE); Herzog, Robert, 82008 Unterhaching (DE); Degner, Kay, 81545 München (DE); Brüntrup, Matthias, 81539 München (DE)
(74) Representative: Meilinger, Claudia Sabine

(57) **Abstract**

A gas separation apparatus for separating gas from liquid of a continues liquid phase fluid comprising gas, the gas separation apparatus comprising,
a vertical pipe (1) which comprises a feed inlet (2) on the pipe wall, a lower end opening (3) and a gas outlet (4) at the other upper end,
a settling chamber (5) which is connected to the lower end opening (3) of the vertical pipe (1) and extends downward to a chamber liquid outlet (14),
a shell (6) which comprises an opening (7) to receive the settling chamber (5), wherein a ring-shaped space (8) is formed between the settling chamber (5) and the shell (6), a vessel (9) which accommodates the shell (6), wherein it comprises a vessel liquid outlet (10).

## Description

The present invention is related to a gas separation apparatus for separating gas from a liquid comprising gas and a corresponding method for separating gas from the liquid.

### Background

Gas separation from a liquid is the removal of dissolved gases from liquids, especially water or aqueous solutions. Gases are removed for various reasons. Chemists remove gases from solvents when the compounds they are working on are possibly air- or oxygen-sensitive, or when bubble formation at solid-liquid interfaces becomes a problem. The formation of gas bubbles is also undesirable when a liquid is to be frozen which necessitates degassing beforehand.

Removal of gas bubbles from a continuous liquid phase is also desired in an electrolysis, especially using a PEM (proton exchange membrane). Electrolysis can be used to produce hydrogen, in which water, for example, is separated or converted into oxygen and hydrogen using electrical energy. This is also referred to as water electrolysis. In an electrolysis using PEM, a large proportion of water usually remains on the oxygen side of the membrane, while the hydrogen is produced and discharged on the other side of the membrane. In order to limit the temperature, rise of the water, a large portion of water are circulated. The oxygen initially remains in the water and is then typically separated from the water in a tank, also so-called gas separation vessel. Since the water typically is to be reused and again guided into the electrolysis unit for separation, the oxygen remaining in the water should be removed from the water beforehand as good as possible, at least excess oxygen that is not soluble in water. Small oxygen bubbles, which get back into the electrolyze, can have a negative impact on performance and service life. This application is not limited to PEM electrolysis but can also be applied to other types of electrolysis, such as alkaline electrolysis.

For the purpose of separating gases from the liquid, the gas bubbles need a certain amount of time, depending on their size and the direction of flow of the liquid, to rise to the surface of the liquid due to the difference in density and thus to be considered separated. The higher the residence time of the liquid phase in the gas separation apparatus, the larger and more expensive it becomes. In this way, the smallest bubbles can no longer be separated economically.

It is an object of the present invention to provide an advantageous gas separation apparatus and a corresponding method which separates the gas in a more efficient and cost-effective way.

### Disclosure of the invention

The present invention provides a gas separation apparatus of separating gas from a liquid according to claim 1 and a corresponding method.

In accordance with the present invention, a gas separation apparatus for separating gas from liquid, preferably water, is provided. The apparatus comprises a vertical pipe, a settling chamber, a shell and a vessel. The vertical pipe comprises a feed inlet on the pipe wall for feeding the liquid to be degassed into the apparatus. It further comprises a lower end opening and a gas outlet at the upper end. The settling chamber is connected to the lower end opening of the vertical pipe and does not necessarily have to be filled.-The settling chamber is dimensioned in such a way that gas bubbles of a certain size can rise against the sinking liquid. The shell is provided as a housing which receives the settling chamber in a way that a ring-shaped gap is formed between the settling chamber and the shell. Lastly, a vessel is provided accommodating the shell and has a liquid outlet which is preferably connected to a pump.

During the gas separation process, the liquid to be degassed is fed into the vertical pipe via the feed inlet. The bulk of gas contained therein escapes through the gas outlet at the upper end of the pipe and the remaining 2-phase mixture enters the settling chamber. In the settling chamber, the gas bubbles rise to the surface due to their low density, while the liquid flows downward due to gravity. As the gas bubbles rise through the liquid phase, they encounter other gas bubbles and coalesce with them to form larger bubbles which happens due to the difference in buoyancy between the gas and liquid phase. The larger bubbles rise to the surface and are separated from the liquid phase. The optional coalescing aid in the form of a high specific surface area medium, such as a packing or wire mesh, in the settling chamber improves bubble coalescence and thus average bubble size. That facilitates bubble ascension and further improves gas separation efficiency. Afterwards the degassed liquid flows into the shell and rises through the annular space between the settling chamber and the shell and flows over the opening of the shell into the vessel. The liquid removed from gas is delivered to a pump which is connected to the liquid outlet of the vessel.

By nesting the settling chamber, the shell and the vessel into each other, a longer residence time of the gas bubbles with a considerably low overall height of the apparatus is achieved which significantly improves the gas separation efficiency and reduces costs and space requirement. A significant technical advantage is also achieved by utilizing simple components such as cylindrical parts without bends which enables uncomplicated coating of material on the components, effectively prevent the entry of ions that could interfere with the post-treatment of the degassed liquid, e.g. the performance of an electrolyzer. In addition, the syphon effect or hydraulic decoupling between the shell and the vessel is achieved via the annular space between the settling chamber and the shell. This means that the liquid level in the settling chamber is almost independent of the liquid throughput, making it especially suitable for large operating ranges such as PEM electrolyzers. This design eliminates the need for overflow pipes, which typically require a higher space requirement and are dependent on the required liquid level and flow rate.

Furthermore, this way of accommodating the shell within the vessel results in the overflow from the annular gap being routed to the gas phase of the vessel which forms hydraulic decoupling. This hydraulic decoupling prevents explosion pressure resulting from an explosion in the settling chamber from being transmitted via the incompressible liquid to downstream equipment as like pump, heat exchanger or stack. The explosion occurs when the feed of the gas separation apparatus contains hydrogen and oxygen, especially when the feed is a two-phase flow of mainly O2 and water from an electrolyzer, especially a PEM stacks, in which the H2 content in the O2 gas exceed the lower explosive limit due to permeation, defects or ruptures of the membrane. An explosion of this nature can potentially transition from deflagration to detonation even in small spaces and piping, resulting in an extremely high explosion pressure that can cause significant damage. By accommodating the shell within the vessel in this way, the hydraulic decoupling design offers several advantages such as compactness and space efficiency. It effectively blocks pressure waves from propagating into the liquid outlet of the vessel. This means that the downstream system is non-explosive, allowing for a lower design pressure that corresponds only to operational conditions. As only the vertical pipe, the settling chamber and the shell would be affected in the event of an explosion or detonation, a high demanding test is only required for these three components but not for the vessel and downstream components which are decoupled from the possible explosion.

In one embodiment, the settling chamber is at least partially, preferably fully filled with internals for separation gas from the liquid. It is preferable that the vessel is also at least partially filled with high specific surface area internals which further facilitate the gas separation process. The internals may include trays, packing, wire meshes or combinations of these. The internals are used to maximize the contact surface area between the gas and liquid phase, thereby promoting bubble coalescence. A support grid could be provided at the liquid outlet of the settling chamber to hold the internals in place.

In one embodiment, at least one vent opening is provided on the vessel which ensures pressure balance.

In another embodiment, the vessel has a lid which covers its opening to prevent the separated gas from being discharged into the atmosphere. The lid is preferably structed to create a seal that only allows the vertical pipe to pass through.

In another embodiment, a circular overflow weir is arranged at the opening of the shell which has a larger outer diameter than that of the shell which results in the shell having a T-shaped longitudinal section. The liquid rises through the circular gap up to the opening of the shell and the overflow flows into the vessel via the weir which connects the shell to the vessel.

The weir is used to maintain a stable liquid throughput which is independent of the liquid level in the settling chamber. By separating these two hydraulic levels with the weir, high pressure is prevented from transmitting to the downstream components which can damage its sensitive machinery. The weir could be formed as a circular annular space surrounding the shell opening with relatively high cross-sectional area or weir length which allow the excess liquid to flow through the weir into the vessel in a controlled and consistent way. The overflow weir has a greater diameter than it of the shell.

In another embodiment, the vertical pipe forms the settling chamber by extending the pipe downwards. Alternatively, the vertical pipe and the settling chamber are manufactured as a single unit.

In a preferred embodiment, at least one of the vessel, the settling chamber, the shell and the vertical pipe is coated with a material like PTFE or other suitable materials create a barrier that helps prevent the entry of ions from the environment that could interfere with the performance of a post-treatment such as in the electrolyzer. Additionally, coatings help mitigate the corrosive effects of electrolysis and other environmental factors, extending the lifespan and durability of the equipment.

A corresponding gas separation process is also provided which is implemented in the above-described apparatus. The liquid is preferably water and the gases to be separated are at least one of oxygen, carbon dioxide, argon, nitrogen, hydrogen sulfide, sulfur dioxide, ammonia gas, or any combination thereof. The gas separation process involves continuously feeding water with dissolved gases into the apparatus, resulting in the production of sufficiently degassed water that can be further utilized.

The gas separation process is especially useful when applied downstream of an eletrolyzer that uses a proton exchange membrane. In these electrolyzers, a significant amount of water remains on the oxygen side of the membrane. Since this water is typically reused in the electrolysis unit, it is important to remove as much oxygen from the water as possible to avoid any negative impact on the electrolyzer.

### Description of figure

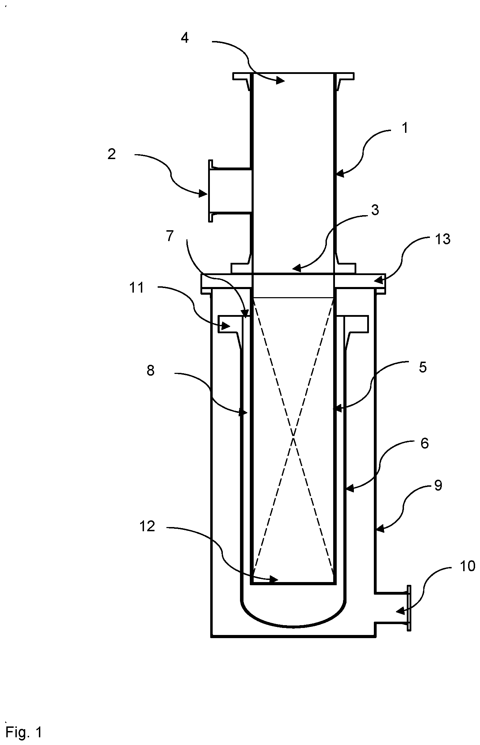

Fig. 1 shows a perspective view of the gas separation apparatus according to a preferred embodiment of the present invention.

Figure 1 shows a gas separation apparatus comprising a vertical pipe 1 which extends upwards to a gas outlet 4 and extends downwards to a lower end opening 3 which is connected with a settling chamber 5. A feed inlet 2 is provided on the wall of the vertical pipe to introduce the feed stream to be separated into liquid and gas. This apparatus is especially beneficial for a liquid containing a big amount of gas beyond its solubility, for instance, the water from the oxygen side of the PEM electrolyzer. The settling chamber 5 is provided with a grid covering the chamber liquid outlet 12 and the chamber 5 is filled with coalescing aid internals to facilitate the separation of gas from the liquid. A shell 6 with a shell opening 7 is provided to receive the settling chamber from the downside to form a ring-shaped space 8 between the settling chamber 5 and the shell 6. A vessel 9 is provided to accommodate the shell 6 in a way that the shell 6 and the settling chamber 5 are completely contained within the inner space of the vessel 9. In addition, the vessel 9 comprises a lid 13 and a vessel liquid outlet 10 at its bottom which is connectable to a pump. To prevent the separated gas from escaping through the vessel opening, the lid 13 only allows for the vertical pipe 1 to pass through while covering the rest of the vessel opening. Furthermore, at least one vent hole is provided on the wall of the vessel 9 to ensure pressure balance.

At the shell opening 7 a circular annual weir 11 with larger diameter, comparing to the shell diameter, is arranged which results in a T-shaped longitudinal section of the shell 6 which allow the overflow stream from the circular space 8 to pass through the weir 11 into the vessel 9. Preferably, the vessel 9, the settling chamber 5, the shell 6 and the vertical pipe 1 are mostly coated with a material like PTFE which create a barrier that helps prevent the entry of ions from the environment that could interfere with the performance the electrolyzer.

During the gas separation process, the feed stream is fed into the apparatus via the feed inlet 2. The gas escaping upwards via the gas outlet 4 and the two-phase mixture stream passes into the settling chamber 5. In the settling chamber 5, the gas bubble growth is promoted which leads to aggregation into larger bubbles. The larger bubbles can rise against the sinking liquid towards the surface of the liquid. Once they reach the surface, they can be more easily separated. The liquid goes further through chamber liquid outlet 12 into the ring-shaped space 8 and the overflow from the space 8 passes through the circular weir 11 into the vessel 9. The vessel 9 could be also filled with coalescing aid to further facilitate the gas separation process. Once the liquid reaches the bottom section of the vessel 9, it is effectively separated from the gas and can be discharged via the liquid outlet 10 for further use.

By structuring the settling chamber 5, shell 6 and vessel 9 to fit into each other, a longer residence time of the gas bubbles with a considerably low overall height of the apparatus is achieved which significantly improves the gas separation efficiency and reduces costs and space requirement.

In case small amount of hydrogen from the electrolyzer is mixed into the oxygen which causes an explosion in the gas separation apparatus, a pressure wave caused by the explosion cannot continue into the liquid outlet 10 by means of hydraulic decoupling as described above.

## Claims

1. A gas separation apparatus for separating gas from liquid of a continues liquid phase fluid comprising gas, the gas separation apparatus comprising,
- a vertical pipe (1) which comprises a feed inlet (2) on the pipe wall, a lower end opening (3) and a gas outlet (4) at the other upper end,
- a settling chamber (5) which is connected to the lower end opening (3) of the vertical pipe (1) and extends downward to a chamber liquid outlet (14),
- a shell (6) which comprises an opening (7) to receive the settling chamber (5), wherein a ring-shaped space (8) is formed between the settling chamber (5) and the shell (6),
- a vessel (9) which accommodates the shell (6), wherein it comprises a vessel liquid outlet (10).

2. A gas separation apparatus according to claim 1, wherein the vessel liquid outlet (10) is connected to a pump.

3. A gas separation apparatus according to one of the preceding claims, wherein the settling chamber (5) and/or the vessel (9) is at least partially filled with internals for separating gas from the liquid.

4. A gas separation apparatus according to one of the preceding claims, wherein at least one vent hole is provided on the vessel (9).

5. A gas separation apparatus according to one of the preceding claims, wherein the vessel is provided with an opening, and it comprises a lid (13) which covers the opening of the vessel.

6. A gas separation apparatus according to one of the preceding claims, wherein an overflow weir (11) is arranged at the shell opening (7).

7. A gas separation apparatus according to claim 5, wherein a circular pipe is arranged at the shell opening (7) which is connected to the lid of the vessel to fix the shell.

8. A gas separation apparatus according to claim 6, where the overflow weir (11) is formed as a circular annual space which has a larger diameter than it of the shell.

9. A gas separation apparatus according to one of the preceding claims, wherein a part of the vertical pipe forms the settling chamber, or the pipe and the settling chamber are built as a single unit.

10. A gas separation apparatus according to one of the preceding claims, wherein at least one of the vessel (9), the settling chamber (5), the shell (6) and the pipe (1) is coated with a material which prevent ion from entering into the liquid.

11. A gas separating process with the gas separation apparatus according to one of the preceding claims 1 to 10, wherein the liquid is water and the gas to be separated is at least one of oxygen, carbon dioxide, argon, nitrogen, hydrogen sulfide, sulfur dioxide and ammonia gas.

12. A gas separating process according to claim 11, wherein the liquid is fed into the gas separating apparatus in a continuous way.

13. A gas separating process according to claim 11 or 12, wherein the liquid is water from anode side of an electrolyzer with a proton exchange membrane and the gas to be separated is oxygen.
